# EUROPÄISCHE PATENTSCHRIFT

(11) **EP 2 287 560 B1**
(45) Veröffentlichungstag und Bekanntmachung des Hinweises auf die Patenterteilung: **17.08.2011**
(21) Anmeldenummer: 09010689.9
(22) Anmeldetag: 19.08.2009
(51) Int. Cl.: G01B 11/245

(54) **Verfahren zum Messen von Objekten**
Method for measuring objects
Procédé pour mesurer des objets

(43) Veröffentlichungstag der Anmeldung: 23.02.2011
(73) Patentinhaber: Pepperl & Fuchs GmbH, 68307 Mannheim (DE)
(72) Erfinder: Olbrecht, Torsten, 67240 Bobenheim-Roxheim (DE); Rauscher, Benedikt, 61440 Oberursel (DE); Tabel, Ernst, 22337 Hamburg (DE)
(74) Vertreter: Schiffer, Axel Martin

(56) Entgegenhaltungen:
- US-A1- 2004 032 974
- US-A1- 2004 130 729
- US-B1- 6 542 249

## Beschreibung

Die vorliegende Erfindung bezieht sich auf ein Verfahren zum Nachweis von Objekten nach dem Oberbegriff des Anspruchs 1.

Bei einem gattungsgemäßen Verfahren, welches beispielsweise aus US 6,542,249 bekannt ist, wird mit einer Mehrzahl von Sendemodulen, die zueinander beabstandet angeordnet sind, ein Lichtmuster in einen Überwachungsbereich gestrahlt. Aus dem Überwachungsbereich zurückgestrahltes Licht wird mit mindestens einer ortsauflösenden Detektoreinrichtung nachgewiesen und auf Grundlage des nachgewiesenen Lichts wird nach dem Prinzip des Lichtschnitts eine Oberflächenkontur eines in dem Überwachungsbereich befindlichen Objekts bestimmt. Durch die Abstände, mit welchen die Sendemodule zueinander angeordnet sind, ist dabei eine maximal mögliche Ortsauflösung gegeben.

Verfahren der genannten Art, die ganz allgemein der zwei- oder dreidimensionalen Vermessung von Objekten mit Kamerasystemen dienen, werden beispielsweise in der industriellen Fertigungs- und Automatisierungstechnik für eine Vielzahl von Aufgabenstellungen eingesetzt. Beispielsweise kann vor dem Einsetzen einer Autotür in eine Karosserie geprüft werden, ob der Türspalt, also der Abstand der Tür zu einer umgebenden Profilierung der Karosserie, umlaufend die gewünschte Konstanz aufweist. Hierauf wird in der Automobilindustrie großer Wert gelegt.

Ein erster Roboter führt dabei die einzusetzende Tür an die Karosserie heran. Der Türspalt wird dann umlaufend mit einem Lichtschnittsensor geprüft, der beispielsweise von einem zweiten Roboter geführt wird. Die Tür wird dann so eingerichtet, bis der Türspalt umlaufend möglichst konstant ist.

Eine weitere Aufgabenstellung besteht in diesem Zusammenhang allgemein darin, dass zunehmend auch sehr hohe Messgeschwindigkeiten und Messraten nachgefragt werden. Hierbei können sich insbesondere die bei einer großen Zahl von Sendemodulen auftretenden großen Datenmengen bei einem einzelnen Scan nachteilig bemerkbar machen.

Aus US 2004/0130729 A1 ist ein Verfahren zum Bestimmen von Abmessungen eines Objekts bekannt. Bei dem Verfahren wird ein Streifenmuster aus verschiedenen Winkeln auf das Objekt gestrahlt und die vom Objekt zurückgeworfenen Muster werden aus verschiedenen Messwinkeln beobachtet. Aus diesen Informationen werden darauf Abmessungen des Objekts berechnet.

Weitere Verfahren, bei denen Muster auf Objekte eingestrahlt und aus den vom Objekt zurückgeworfenen Mustern Größen des Objekts bestimmt werden, sind in US 6,542,249 B1 und US 2004/0032974 A1 beschrieben.

Als eine Aufgabe der Erfindung kann angesehen werden, ein Verfahren der oben genannten Art zu schaffen, bei dem die Messungen besonders rasch und gleichwohl genau durchgeführt werden können.

Diese Aufgabe wird durch das Verfahren mit den Merkmalen des Anspruchs 1 gelöst.

Vorteilhafte Varianten des erfindungsgemäßen Verfahrens sind Gegenstand der abhängigen Ansprüche und werden außerdem in der folgenden Beschreibung, insbesondere im Zusammenhang mit den beigefügten Figuren, beschrieben.

Das Verfahren der oben genannten Art ist erfindungsgemäß dadurch weitergebildet, dass in einer Übersichtsmessung eine erste Auswahl von Sendemodulen betrieben wird, dass durch die erste Auswahl von Sendemodulen eine erste Ortsauflösung gegeben ist, dass in einer Objektmessung eine zweite Auswahl von Sendemodulen betrieben wird und dass durch die zweite Auswahl von Sendemodulen oder durch die zweite Auswahl von Sendemodulen zusammen mit mindestens einer Teilmenge von Sendemodulen der ersten Auswahl eine zweite Ortsauflösung gegeben ist, die größer ist als die erste Ortsauflösung.

Als ein Kerngedanke der Erfindung kann erachtet werden, bei einem gattungsgemäßen Verfahren zunächst eine Übersichtsmessung durchzuführen, bei der nur ein Teil der insgesamt verfügbaren Sendemodule zum Einsatz kommt.

In einer zweiten Messung, die auch als Objektmessung bezeichnet wird, kommt sodann eine zweite Auswahl von Sendemodulen zum Einsatz, wobei dabei entweder die Ortsauflösung größer ist, die verwendeten Sendemodule also einen kleineren Abstand voneinander aufweisen, oder die Ortsauflösung ist jedenfalls zusammen mit einer Teilmenge von Sendemodulen der ersten Auswahl größer als die erste Ortsauflösung.

Als wesentlicher Vorteil der vorliegenden Erfindung kann erachtet werden, dass in sehr kurzer Zeit eine Übersichtsmessung bereitgestellt werden kann und man sodann das eigentlich nachzuweisende Objekt, insbesondere mit einer besseren Ortsauflösung, vermessen werden kann.

Die Messgeschwindigkeit kann auf diese Weise deutlich gesteigert werden.

Bei einer vorteilhaften Variante des erfindungsgemäßen Verfahrens werden für die Auswahl der Sendemodule für die Übersichtsmessung und/oder für die Objektmessung Informationen über die tatsächlich nachzuweisenden Objekte verwendet. Hierbei kann es sich sowohl um geometrische Informationen der fraglichen Objekte, als auch um geometrische Informationen über solche Objekte handeln, von denen die im konkreten Fall nachzuweisenden Objekte unterschieden werden sollen. Hiervon hängt im Einzelfall die Genauigkeit ab, mit welcher die Oberflächenkonturen bestimmt werden müssen.

Besondere Problemstellungen können sich bei Verfahren der oben genannten Art außerdem ergeben, wenn die zu überprüfenden Objekte eine bestimmte Farbe aufweisen, die dazu führt, dass das Licht der Sendemodule nicht in ausreichendem Maß zurückgestrahlt wird. Beispielsweise wäre dies der Fall, wenn grüne Objekte untersucht werden sollen mit einem Sensor, der rotes Licht aussendet. Das rote Licht würde dann von dem grünen Objekt weitgehend absorbiert und nur in geringem Umfang zurückgestrahlt werden.

Aus fertigungstechnischen Gründen werden in der Automobilindustrie derzeit Autotüren noch im unlackierten Zustand in die Karosserie eingesetzt. Es ist jedoch daran gedacht, dieses Verfahren dahingehend zu ändern, dass bereits lackierte Türen in die ebenfalls bereits lackierten Karosserien eingesetzt werden. Bei bestimmten Lackfarben könnten dann bisher verwendete Sensoren zur Bestimmung des Türspalts wegen der unzureichenden Rückstrahlung nicht mehr eingesetzt werden. Da bekannte Sensoren häufig mit rotem Licht arbeiten, könnte dementsprechend der Türspalt bei grünen Autotüren nur schlecht geprüft werden. Da meistens nicht in Reflexionsgeometrie gemessen wird, sind auch stark spiegelnde oder glänzende Flächen, beispielsweise glänzend lackierte Oberflächen, problematisch, da dann nur sehr wenig Licht in anderen Richtungen als der Reflektionsrichtung abgestrahlt wird.

Bei einer besonders bevorzugten Variante des erfindungsgemäßen Verfahrens senden Sendemodule jeweils Licht mit mindestens zwei verschiedenen Wellenlängen aus und das Licht mit den mindestens zwei verschiedenen Wellenlängen wird auf einem gemeinsamen Strahlengang auf das Objekt geleitet.

Dadurch wird ein Verfahren geschaffen, mit dem Objekte sehr weitgehend unabhängig von deren Farbe geprüft werden können. Außerdem kann eine korrekte Arbeitsweise des erfindungsgemäßen Verfahrens leicht überprüft werden.

Als eine Kernidee dieser Weiterbildung der Erfindung kann angesehen werden, nicht mehr nur Licht einer einzigen Wellenlänge, sondern von vornherein mehrere Wellenlängen zu verwenden und auf das zu prüfende Objekt zu strahlen. Man hat so bei der Auswertung grundsätzlich mehr Möglichkeiten.

Als eine weitere Grundidee dieser Weiterbildung der Erfindung kann erachtet werden, die verschiedenen Wellenlängen auf ein und demselben optischen Strahlengang in den Überwachungsbereich zu leiten. Einerseits können die Aufbauten auf diese Weise kompakt gehalten werden und andererseits sind die Strahlungsbestandteile in geometrischer Hinsicht gleichwertig und, falls sinnvoll, kann bei der Auswertung leicht von einer Wellenlänge auf eine andere Wellenlänge übergegangen werden.

Umfangreiche Tests, die bei Vorarbeiten zu dieser Erfindung durchgeführt wurden, ergaben, dass das Rückstreuverhalten bei nicht sichtbarem Licht wesentlich weniger von der Farbe des Objekts abhängt als bei sichtbarem Licht. Bei einer besonders bevorzugten Ausgestaltung des erfindungsgemäßen Verfahrens wird deshalb nur nicht sichtbares Licht nachgewiesen und für die Auswertung verwendet.

Mit Hilfe des erfindungsgemäßen Verfahrens können demgemäß Oberflächen, die im sichtbaren Bereich spiegelnd sind oder bestimmte Wellenlängen sehr stark absorbieren, deutlich besser untersucht werden.

Das Licht der sichtbaren Lichtquelle kann besonders vorteilhaft verwendet werden, um den Sensor geeignet zu justieren oder auszurichten. Außerdem hat ein Benutzer durch das sichtbare Licht immer eine zuverlässige optische Kontrollmöglichkeit, ob der Sensor richtig positioniert ist, da erfindungsgemäß die Strahlung der verschiedenen Wellenlängen auf ein- und demselben Strahlengang auf das Objekt geleitet wird.

Grundsätzlich können als Quellen für das nicht sichtbare Licht auch Ultraviolett-Lichtquellen eingesetzt werden. Besonders bevorzugt werden jedoch Infrarotlichtquellen verwendet.

Um das Signal-Rausch-Verhältnis zu steigern, kann vor der Detektoreinrichtung ein wellenlängenselektiver Bandpassfilter angeordnet sein.

Prinzipiell kann für jede Lichtquelle eines Sensormoduls eine eigene Kollimationsoptik vorhanden sein. Bei einer besonders vorteilhaften Ausgestaltung der erfindungsgemäßen Vorrichtung ist in den Sendemodulen jeweils eine dem Strahlteiler nachgeordnete Kollimationslinse vorhanden. Separate Kollimationslinsen für die einzelnen Lichtquellen sind dann nicht mehr notwendig. Der Aufbau der Sensemodule kann dann noch kompakter gehalten werden und ist damit für einen Mehrfachlinienprojektor, also die Durchführung des erfindungsgemäßen Verfahrens, besonders gut geeignet. Außerdem kann durch die Verwendung von einer gemeinsamen Kollimationslinse für beide Laser die Zahl der Freiheitsgrade für mögliche Toleranzen reduziert werden.

Als Lichtmuster kommen grundsätzlich alle Strukturen in Betracht, welche zur Bestimmung der Oberflächenkontur eines Objekts geeignet sind. Besonders bevorzugt wird als Lichtmuster ein Streifenmuster verwendet. Die Auswertung der Messdaten gestaltet sich besonders einfach, wenn durch die Sendemodule gleiche Lichtmuster, insbesondere parallel, in den Überwachungsbereich gestrahlt werden. In apparativer Hinsicht ist hierbei von Vorteil, wenn ein Gehäuse vorhanden ist, in welchem eine Vielzahl von Sendemodulen untergebracht werden kann. Besonders bevorzugt sind die Sendemodule in dem Gehäuse dabei mit gleichen Abständen zueinander angeordnet.

In vorrichtungsmäßiger Hinsicht weisen die Sendemodule zweckmäßig jeweils eine Zylinderlinse auf zum Bereitstellen eines auf ein Objekt zu strahlenden Lichtstreifens. Als Lichtquellen können grundsätzlich alle Lichtquellen verwendet werden, welche die gewünschten Wellenlängen mit hinreichender Intensität emittieren. Besonders bevorzugt werden Laserdioden verwendet. Als Strahlteiler können bevorzugt dichroitische Strahlteiler verwendet werden.

Eine größere Variabilität der Einsatzmöglichkeiten wird erzielt, wenn mehrere, insbesondere zwei, Detektoreinrichtungen vorhanden sind, mit denen verschiedene Wellenlängen des vom Objekt zurückgestrahlten Lichts nachweisbar sind.

Hierdurch werden Verfahrensvarianten ermöglicht, bei denen Licht von mindestens zwei verschiedenen Wellenlängen nachgewiesen wird. Weiterhin kann ermittelt werden, für welche Wellenlänge das Signal-Rausch-Verhältnis am größten ist und die Auswertung kann dann für die so ermittelte Wellenlänge durchgeführt werden.

Bei völlig unbekannter Oberflächenkontur des zu prüfenden Objekts kann es bei der Auswertung Mehrdeutigkeiten geben, da die von der ortsauflösenden Detektoreinrichtung gemessenen Strukturen nicht eindeutig Teillichtmustern zugeordnet werden können, welche die verschiedenen Sendemodule auf das zu prüfende Objekt strahlen.

Um dies zu vermeiden, können zweckmäßig die verschiedenen Sendemodule zeitlich nacheinander, insbesondere einzeln, aktiviert werden. Beispielsweise können jeweils benachbart angeordnete Sendemodule nacheinander und zyklisch aktiviert werden. Zur Durchführung des erfindungsgemäßen Verfahrens kann hier eine besondere Steuereinrichtung vorhanden sein, mit welcher die erste und die zweite Auswahl getroffen wird und welche auf Grundlage dieser ersten und zweiten Auswahl sodann die Sendemodule ansteuert.

Die Zuordnung der Messdaten zu einem bestimmten Sendemodul oder einem bestimmten Lichtstreifen wird so deutlich vereinfacht und die Funktionalität der erfindungsgemäßen Vorrichtung und des erfindungsgemäßen Verfahrens zur dreidimensionalen Vermessung von Objekten wird deutlich gesteigert.

Die Steuereinrichtung kann beispielsweise ein Mikrocontrollersystem sein und jedes der Sendemodule kann über einen gemeinsamen Datenbus mit der Steuereinrichtung verbunden sein. Jedes Sendemodul kann eine eigene Adresse aufweisen und lässt sich dann individuell entweder aktivieren oder deaktivieren. Somit sind praktisch beliebige Kombination und Konstellationen beim Ansteuern möglich und das klassische "Multiplexen", bei welchem die Sendemodule örtlich und zeitlich aufeinander folgend angesteuert werden, wird zu einem Spezialfall.

Ein Anwendungsbeispiel könnte beispielsweise eine Messsituation sein, bei der sich in einem Objekt ein Loch befindet, dessen Durchmesser mit hoher Genauigkeit ermittelt werden soll. Die Lage des Objekts und damit des Lochs im Messfenster soll allerdings variabel sein. Im klassischen und herkömmlichen Fall des Multiplexens müssen sehr viele Laserlinien wegen der geforderten Messgenauigkeit für die Ermittlung des Lochdurchmessers über das gesamte Messfenster aktiviert und ausgewertet werden. Das ist mit hohem Rechen- und Zeitaufwand verbunden. Das erfindungsgemäße Verfahren bietet den Vorteil, in einem ersten Schritt mit grob gerasterten Laserlinien das Loch zunächst überhaupt zu finden. Anschließend werden Laserlinien mit hoher Dichte ausschließlich auf den gefundenen Lochbereich zur genauen Vermessung des Lochdurchmessers aktiviert. Durch gezielte Ansteuerung der einzelnen Sendemodule kann deshalb die Flächenabtastung des Laserlichtschnitt-Sensors erheblich verbessert werden.

Grundsätzlich können dabei die Sendemodule völlig beliebig ausgewählt werden. Bei zweckmäßigen Verfahrensvarianten weisen aber die Sendemodule der ersten Auswahl und/oder die Sendemodule der zweiten Auswahl gleiche Abstände voneinander auf.

Bei weiteren besonders bevorzugten Ausführungsformen des erfindungsgemäßen Verfahrens werden beim Messen Scans in dem Sinn durchgeführt, dass Sendemodule der ersten Auswahl, die zueinander benachbart sind, zeitlich unmittelbar nacheinander aktiviert werden. Als zueinander benachbarte Sendemodule werden hier auch solche Sendemodule angesehen, die durch weitere Sendemodule, die nicht der ersten Auswahl angehören, getrennt sind. Ein solcher Scan kann dann auch als Übersichtsscan bezeichnet werden.

In entsprechender Weise können zum Durchführen eines Objektscans Sendemodule der zweiten Auswahl, die zueinander benachbart sind, zeitlich unmittelbar nacheinander aktiviert werden. Die Eigenschaft, zueinander benachbart zu sein, trifft wiederum auch für solche Sendemodule der zweiten Auswahl zu, die durch ein Sendemodul getrennt sind, wobei das trennende Sendemodul aber nicht zur zweiten Auswahl gehört.

Gemäß Abtasttheorem ist weiterhin bevorzugt, dass bei der zweiten Ortsauflösung der kleinste Abstand des von den Sendemodulen generierten Lichtmusters kleiner ist als die Hälfte einer linearen Abmessung eines nachzuweisenden Objekts. Eine fehlerfreie Objektzuordnung ist auf diese Weise leichter möglich.

Bei der Aufnahme der Messdaten kann noch weiter Zeit eingespart werden, wenn eine Übersichtsmessung abgebrochen wird, sobald ein Objekt festgestellt wird und wenn anschließend die Messung direkt als Objektmessung, insbesondere als Objektscan, weitergeführt wird.

Bei dem erfindungsgemäßen Verfahren ist ein gesamter erfasster Bereich bei der Übersichtsmessung größer als bei der Objektmessung. Dabei kann die Übersichtsmessung, insbesondere in praktisch derselben Zeit wie die eigentliche Objektmessung oder, je nach Auswahl der Sendemodule, gegebenenfalls auch in kürzerer Zeit durchgeführt werden.

Weitere Vorteile und Merkmale der Erfindung werden nachstehend mit Bezug auf die beigefügten schematischen Figuren beschrieben. Hierin zeigt:
- Fig. 1: ein erstes Ausführungsbeispiel eines Sendemoduls für eine Vorrich- tung zur Durchführung des erfindungsgemäßen Verfahrens;
- Fig. 2: ein zweites Ausführungsbeispiel eines Sendemoduls für eine Vorrich- tung zur Durchführung des erfindungsgemäßen Verfahrens;
- Fig. 3: ein Ausführungsbeispiel einer Vorrichtung zur Durchführung des er- findungsgemäßen Verfahrens;
- Fig. 4: ein weiteres Ausführungsbeispiel einer Vorrichtung zur Durchführung des erfindungsgemäßen Verfahrens;
- Fig. 5: eine schematische Ansicht einer ersten Auswahl von Sendemodulen;
- Fig. 6: eine schematische Ansicht eines ersten Beispiels einer zweiten Auswahl von Sendemodulen zur Durchführung einer Objektmessung; und
- Fig. 7: eine schematische Ansicht eines zweiten Beispiels einer zweiten Auswahl von Sendemodulen zur Durchführung einer Objektmessung.

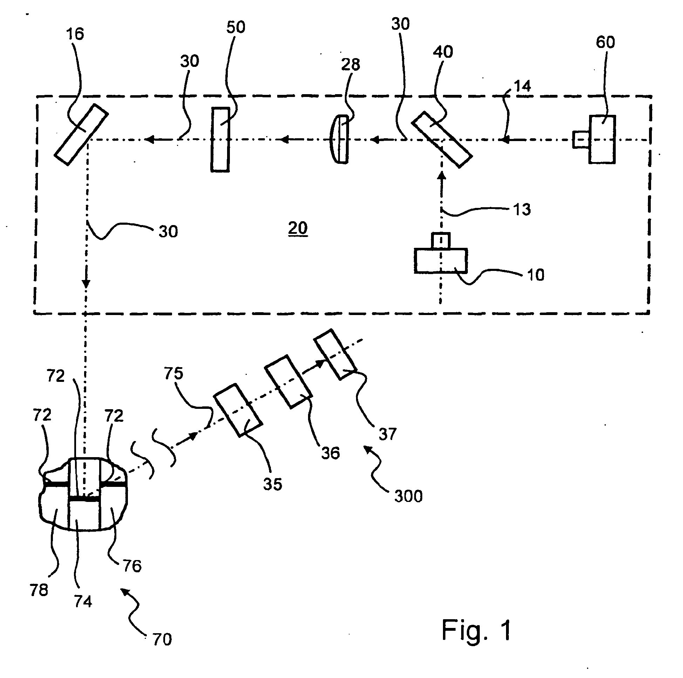

Eine erste Ausführungsvariante eines Sendemoduls 20 für eine Vorrichtung zur Durchführung des erfindungsgemäßen Verfahrens wird mit Bezug auf Figur 1 beschrieben. Äquivalente Komponenten sind in allen Figuren mit denselben Bezugszeichen versehen.

Als wesentliche Bestandteile weist das Sendemodul 20 aus Figur 1 zunächst eine erste Laserdiode 10 als erste Lichtquelle und eine zweite Laserdiode 60 als zweite Lichtquelle auf. Sodann sind ein dichroitischer Strahlteiler 40, eine Kollimationslinse 28, eine Zylinderlinse 50 und Spiegel 16 vorhanden. Diese Komponenten sind in einem nicht mehr dargestellten Gehäuse untergebracht.

In gezeigtem Beispiel sendet die erste Laserdiode 10 rotes Licht 13 und die zweite Laserdiode 60 infrarotes Licht 14 aus. Über den Strahlteiler oder Teilerspiegel 40 wird das rote Licht 13 und das Infrarotlicht 14 auf einen gemeinsamen Strahlengang 30 vereinigt und mit Hilfe der Kollimationslinse 28 auf die Zylinderlinse 50 geleitet, welche das bis dahin rotationssymmetrische Strahlprofil zu einem Streifenprofil umformt. Über den Spiegel 16 wird dieses Streifenprofil sodann umgelenkt und auf ein in Figur 1 schematisch dargestelltes Objekt 70 gestrahlt. Da nur eine einzige Zylinderlinse 50 in dem Sendemodul 20 zur Strahlaufweitung verwendet wird, können hierdurch die Freiheitsgrade für eventuelle Toleranzen weiter reduziert werden. Durch die Umlenkung des Lichtstrahls mit Hilfe des Spiegels 16 wird insgesamt der optische Weg bis zu einem Objekt vergrößert. Bei gleicher Länge eines auf ein Objekt zu strahlenden Lichtstreifens kann durch die Strahlumlenkung außerdem der Divergenzwinkel des Strahlenbündels reduziert und damit die Homogenität der Ausleuchtung des Lichtstreifens gesteigert werden.

Bei diesem zu prüfenden Objekt 70 handelt es sich um einen Ausschnitt des Bereichs eines Türspalts 74 zwischen einer Kfz-Tür 76 und einer Kfz-Karosserie 78. Schematisch dargestellt ist der Verlauf eines auf diesen Bereich gestrahlten Lichtstreifens 72. Der Verlauf dieses Lichtstreifens 72, der im gezeigten Beispiel für einen Nutzer als roter Lichtstreifen sichtbar ist und der wegen des gleichen Strahlengangs 30 auch als Infrarotlicht auf das Objekt 70 gestrahlt wird, wird mit einer ebenfalls schematisch dargestellten Detektoreinrichtung 300 nachgewiesen.

Nach Durchtritt durch ein Empfangsobjektiv 35 tritt das von dem zu prüfenden Objekt 70 zurückgestrahlte Licht 75 durch einen Bandpassfilter 36, der im Wesentlichen nur den infraroten Anteil des Lichts zum Detektor oder Bildaufnehmer 37 durchlässt. Bei dem Detektor oder Bildaufnehmer 37 kann es sich beispielsweise um einen zweidimensionalen CCD- oder CMOS-Chip handeln.

Infrarotlaser sind für die Anwendung auf lackierten Oberflächen, beispielsweise auch lackierte Autotüren, besonders gut geeignet. Außerdem kann mit Hilfe des Bandpassfilters 36, bei dem es sich um einen Infrarot-Durchlassfilter oder allgemein um einen Bandpassfilter zweiter Ordnung, handeln kann, das Signal-Rausch-Verhältnis deutlich gesteigert werden und die Anwendung wird so weitgehend unabhängig von Tageslichteinflüssen.

Wesentlich für das Messprinzip ist, dass die Richtung, in welcher das Lichtmuster auf das zu prüfende Objekt 70 eingestrahlt wird, nicht mit der Detektionsrichtung zusammenfällt. Dies bedeutet, dass eine Triangulationsmessung durchgeführt wird. Beispielsweise führt dieser Winkelversatz zwischen der Einstrahl- und der Beobachtungsrichtung bei außerdem geeigneter relativer Ausrichtung der erfindungsgemäßen Vorrichtung zu dem zu prüfenden Türspalt dazu, dass der in Figur 1 schematisch gezeigte Lichtstreifen 72 im Bereich des Türspalts 74 einen Sprung nach unten aufweist. Aus dem Verlauf dieses Sprungs kann die Oberflächenkontur und damit die Breite des Türspalts 74 bestimmt werden.

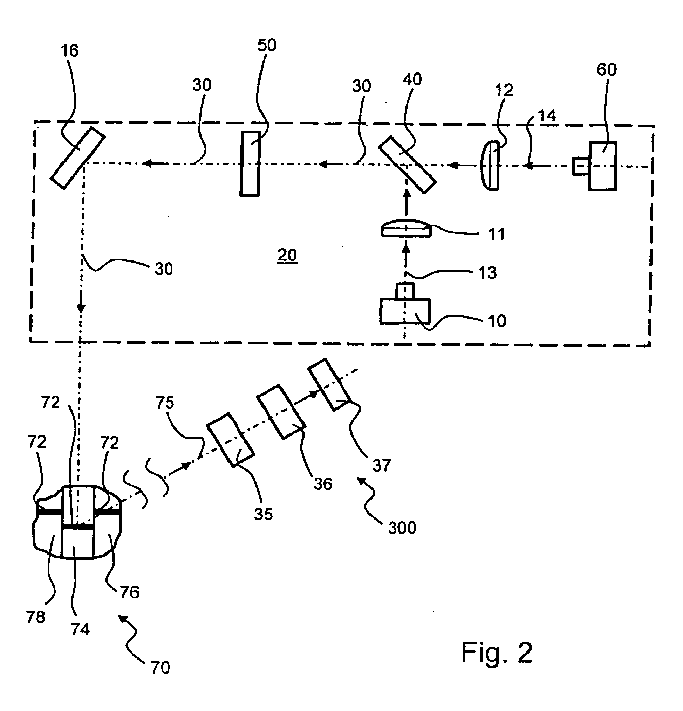

Das in Fig. 2 gezeigte Ausführungsbeispiel unterscheidet sich von der in Fig. 1 gezeigten Variante dadurch, dass für die erste Laserdiode 10 und die zweite Laserdiode 60 jeweils eine separate Kollimationslinse 11, 12 vorhanden ist. Im Übrigen entspricht dieses Ausführungsbeispiel der in Fig. 1 gezeigten Situation.

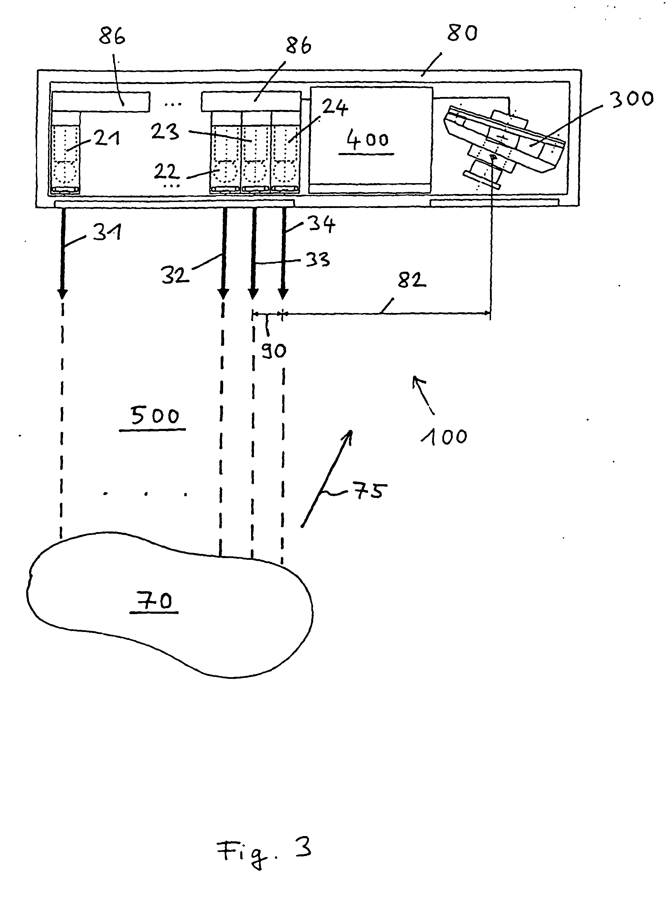

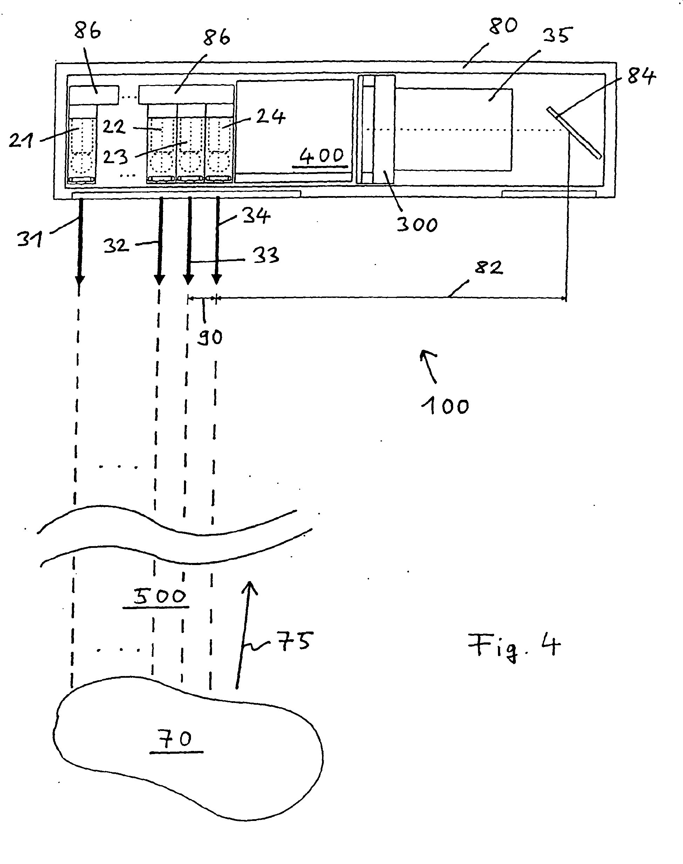

Zwei Ausführungsbeispiele von Vorrichtungen 100 zur Durchführung des erfindungsgemäßen Verfahrens werden mit Bezug auf die Figuren 3 und 4 beschrieben. Bei beiden Varianten sind jeweils eine Mehrzahl von Sendemodulen 21-24, die beispielsweise gemäß der in Fig. 1 dargestellten Ausführungsform aufgebaut sein können, in einem Gehäuse 80 untergebracht. Zwischen den Sendemodulen 21 und 22 befinden sich in Wirklichkeit weitere Sendemodule, die in den Figuren 3 und 4 zur besseren Übersichtlichkeit durch Punkte repräsentiert sind. Durch diese Punkte wird angedeutet, dass die Gesamtzahl der Sendemodule prinzipiell variabel und grundsätzlich auch sehr groß sein kann. Die Sendemodule 21-24 sind n dem Gehäuse 80 jeweils gleich beabstandet und gleich ausgerichtet angeordnet. Das heißt, dass die optischen Achsen 31-34 jeweils parallel und in gleichem Abstand 90 verlaufen. Der Abstand 90, der im Wesentlichen durch die Breite der Sendemodule 21-24 gegeben ist, kann typischerweise 10 mm betragen, wobei dann auf ein zu prüfendes Objekt 70 parallele und jeweils 10 mm beabstandete Lichtstreifen gestrahlt werden.

Die Sendemodule 21-24 sind an ein schematisch dargestelltes Bussystem 86 angeschlossen, welches seinerseits mit einer Steuer- und Auswerteeinheit 400 verbunden ist. Die Gesamtzahl der Sendemodule ist im Grundsatz nur durch die Möglichkeiten des Bussystems und das Fassungsvermögen des Gehäuses 80 begrenzt.

Das von dem zu prüfenden Objekt 70 zurückgestrahlte Licht 75 wird jeweils mit einer Detektoreinrichtung 300 nachgewiesen, die ebenfalls mit der Steuer- und Auswerteeinheit 400 verbunden ist. Durch den Abstand der Detektoreinrichtung 300 von den Sendemodulen 21-24 ist eine Basisweite 82 gegeben, welche zur Realisierung der Triangulationsmessung aus geometrischen Gründen umso größer sein muss, je weiter das zu prüfende Objekt 70 vom Sensor 100 entfernt ist. Diesen Gesichtspunkt betreffen die Unterschiede der in Fig. 3 und Fig. 4 dargestellten Varianten der erfindungsgemäßen Vorrichtung.

Das Ausführungsbeispiel in Fig. 3 weist eine im rechten äußeren Bereich des Gehäuses 80 angeordnete Detektoreinrichtung 300 auf, die deren optische Achse in Richtung eines Überwachungsbereichs 500 geneigt ist.

Eine im Vergleich zu der Anordnung in Fig. 3 größere Basisweite 82 wird mit der in Fig. 4 dargestellten Variante erreicht. Mit dem in Fig. 4 gezeigten Ausführungsbeispiel können deshalb auch Objekte in größerer Entfernung geprüft werden. Dies wird dadurch erreicht, dass das von dem zu prüfenden Objekt 70 zurückgestrahlte Licht über einen Spiegel 84 auf die Detektoreinrichtung 300 geleitet wird. Wegen der größeren Entfernung und der deshalb kleineren Winkel ist zur Erzielung derselben lateralen Auflösung ein größeres Objektiv 35 erforderlich. Die Umlenkung des Strahls durch den Spiegel 34 bringt als weiteren Vorteil mit sich, dass dieses größere Objektiv 35 im Vergleich zu der in Fig. 3 gezeigten Anordnung um 90° gedreht in das Gehäuse 80 eingebaut werden kann, was wegen der größeren Basisweite 82 unaufwändig möglich ist.

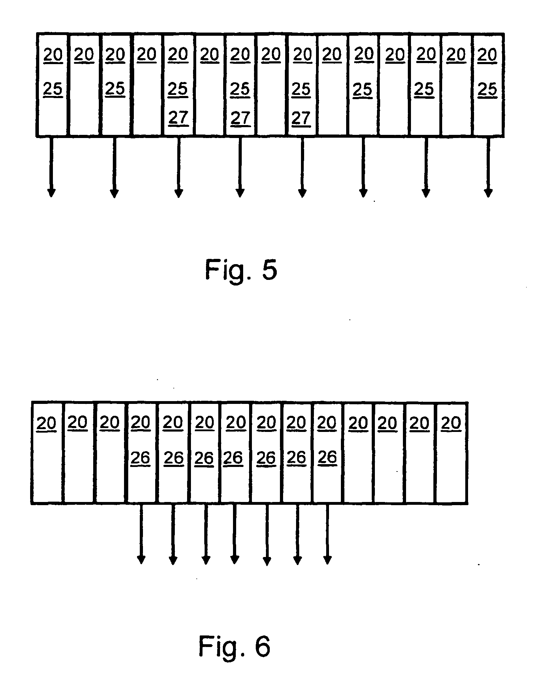

Eine einfache Ausführungsvariante des erfindungsgemäßen Verfahrens wird mit Bezug auf Figuren 5 und 6 erläutert. Dort ist schematisch jeweils eine Anordnung von insgesamt 14 Sendemodulen 20 gezeigt. Für eine Übersichtsmessung werden Sendemodule 25, die einer ersten Auswahl entsprechen, aktiviert. In dem in Fig. 5 schematisch gezeigten Beispiel ist dies jedes zweite Sendemodul 20. Dies bedeutet, dass durch die so getroffene Auswahl die Ortsauflösung der halben maximalen Ortsauflösung, welche mit der Anordnung von Sendemodulen möglich ist, entspricht.

Insbesondere können die Sendemodule 25 der ersten Auswahl in einem Übersichtsscan, also zeitlich nacheinander, aktiviert werden. Beispielsweise kann links beginnend das erste Sendemodul 25 aktiviert werden, anschließend das zweite von links bis man schließlich beim Sendemodul 25 ganz rechts in Fig. 5 angelangt ist.

Im gezeigten Beispiel liefern die Sendemodule 27 ein von einem Hintergrund- oder Referenzsignal abweichendes Ergebnis. Das bedeutet, dass sich im Bereich der durch die Sendemodule 27 im Überwachungsbereich generierten Lichtmuster ein Objekt befindet.

Für eine nach dem erfindungsgemäßen Verfahren durchzuführende Objektmessung werden Sendemodule 26, die einer zweiten Auswahl entsprechen, aktiviert. Schematisch ist dies in Fig. 6 gezeigt. Im Unterschied zu Fig. 5 werden dort insgesamt sieben Sendemodule 26, die einander unmittelbar benachbart sind, aktiviert. Dies kann, wie bereits im Zusammenhang mit Fig. 5 erläutert, insbesondere im Rahmen eines Objektscans, also zeitlich aufeinanderfolgend, durchgeführt werden. Die Sendemodule 26 decken genau den Bereich der Sendemodule 27 ab, welche in der Übersichtsmessung oder dem Übersichtsscan ein vom Hintergrundsignal oder Referenzsignal abweichendes Ergebnis geliefert hatten. Das bedeutet, dass mit den Sendemodulen 26 das in diesem Bereich vorhandene Objekt genauer vermessen wird.

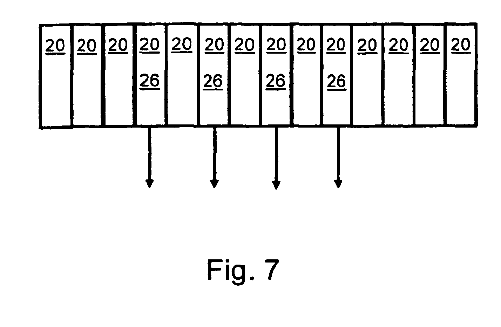

Eine Alternative zu der zweiten Auswahl aus Fig. 6 ist in Fig. 7 dargestellt. Im Unterschied zu der zweiten Auswahl aus Fig. 6 sind dort die aktivierten Sendemodule 28 jeweils durch ein dazwischenliegendes Sendemodul 20 getrennt. Zusammen mit dem Messresultat, welches man für die Sendemodule 27 in der vorausgehenden Übersichtsmessung erhalten hat, kann somit wiederum die gewünschte bessere Ortsauflösung erzielt werden. Prinzipiell kann dieses Verfahren auch verallgemeinert werden. Es kommt nur darauf an, dass man die Messungen des Übersichtsscans, welche bereits für ein nachzuweisendes oder zu identifizierendes Objekt vorgenommen hat, nicht noch einmal bei der eigentlichen Objektmessung durchführt, sondern vielmehr verwendet. Dieses Verfahren ist jedoch nur dann möglich, wenn sich die Messsituation, also die Position des Objekts im Überwachungsbereich, zwischen der Übersichtsmessung und der Objektmessung allenfalls vernachlässigbar ändert.

Durch die vorliegende Erfindung wird ein neuartiges Verfahren zum Nachweis von Objekten bereitgestellt, bei dem eine Anordnung von Lichtschnittsensoren sehr zeitsparend betrieben wird. Dieses Verfahren ist für alle Anwendungen interessant, wo es auf eine besonders rasche und individuelle Objekterkennung und Orts- und/oder Formbestimmung von Objekten ankommt.

Wesentliche Idee des erfindungsgemäßen Verfahrens zum Betrieb eines Laser-Lichtschnittsensors ist, dass man eine zu überwachende Szene zunächst mit niedriger Auflösung abrastert und sodann, wenn ein Objekt detektiert wurde, mit feinerer und insbesondere individuell einzustellender Auflösung weiter misst. Verwendet werden dabei Laser-Lichtschnittsensoren mit einer Vielzahl von Sendemodulen. Dabei kann über einen Bus, insbesondere ein serielles Bussystem, individuell vor jedem Scan eingestellt werden, welches der Sendemodule aktiviert wird und welche Sendemodule dunkel bleiben.

Sehr häufig wird die Situation eintreten, dass über das nachzuweisende Objekt oder die nachzuweisenden Objekte bereits bestimmte Informationen, beispielsweise über Größe und/oder Form vorliegen, und dass lediglich der tatsächliche Ort dieses Objekts in der Szene ermittelt werden muss. Diese Informationen können dann in den individuellen Modus, wie die einzelnen Sendemodule angesteuert werden, einfließen. Grundsätzlich ist auch möglich, dass zunächst ein Scan mit einem relativ groben Raster begonnen wird und dann innerhalb ein- und desselben Scans die Auflösung vergrößert wird, wenn man auf ein Objekt trifft. Diese Verfahrensvariante kann auch als "sukzessive Approximation" bezeichnet werden. Außerdem kann die Auflösung auch für unterschiedliche Objekte unterschiedlich groß eingestellt werden, wobei hierbei zu beachten ist, dass gemäß Abtasttheorem die Abstände, mit denen die Szene abgerastert wird, zweckmäßig höchstens halb so groß gewählt werden, wie das nachzuweisende Objekt.

Anwendungsfelder für das erfindungsgemäße Verfahren können grundsätzlich Aufgaben in der Robotik sein. Die Sendemodule können beispielsweise mit einem Raster von bis zu 5 mm angeordnet werden. Hierbei sind prinzipiell beliebig lange Anordnungen möglich, beispielsweise kann ein Sensor insgesamt 1 m lang sein und demgemäß 200 Sendemodule beinhalten. Grundsätzlich ist auch möglich, dass man anwendungsspezifisch nur bestimmte Steckplätze eines Rasters tatsächlich mit Sendemodulen belegt. Beispielsweise könnte man, wenn dies für den Anwendungsfall ausreichend ist, nur jeden vierten Steckplatz mit einem Sendemodul besetzen.

## Patentansprüche

1. Verfahren zum Messen von Objekten,
bei dem mit einer Mehrzahl von Sendemodulen (20-24), die zueinander beabstandet angeordnet sind, ein Lichtmuster (72) in einen Überwachungsbereich (500) gestrahlt wird,
bei dem aus dem Überwachungsbereich zurückgestrahltes Licht (75) mit mindestens einer ortsauflösenden Detektoreinrichtung (300) nachgewiesen wird, bei dem auf Grundlage des nachgewiesenen Lichts nach dem Prinzip des Lichtschnitts eine Oberflächenkontur eines in dem Überwachungsbereich befindlichen Objekts (70) bestimmt wird,
wobei durch die Abstände, mit welchen die Sendemodule zueinander angeordnet sind, eine maximale Ortsauflösung gegeben ist,
**dadurch gekennzeichnet,**
**dass** in einer Übersichtsmessung eine erste Auswahl von Sendemodulen (25, 27) betrieben wird,
**dass** durch die erste Auswahl von Sendemodulen (25, 27) eine erste Ortsauflösung gegeben ist,
**dass** in einer Objektmessung eine zweite Auswahl (26) von Sendemodulen betrieben wird, welche den Bereich der Sendemodule (27) abdeckt, die in der Übersichtsmessung ein von einem Hintergrundsignal oder Referenzsignal abweichendes Ergebnis geliefert haben,
**dass** durch die zweite Auswahl von Sendemodulen (26) oder durch die zweite Auswahl von Sendemodulen (26) zusammen mit mindestens einer Teilmenge von Sendemodulen (27) der ersten Auswahl eine zweite Ortsauflösung gegeben ist, die größer ist als die erste Ortsauflösung, und
**dass** ein gesamter erfasster Bereich bei der Übersichtsmessung größer ist als bei der Objektmessung.

2. Verfahren nach Anspruch 1,
**dadurch gekennzeichnet,**
**dass** Informationen über nachzuweisende Objekte in die Auswahl der Sendemodule für die Übersichtsmessung und für die Objektmessung einfließen.

3. Verfahren nach Anspruch 1 oder 2,
**dadurch gekennzeichnet,**
**dass** die Sendemodule jeweils Licht (13, 14) mit mindestens zwei verschiedenen Wellenlängen aussenden und
**dass** das Licht mit den mindestens zwei verschiedenen Wellenlängen auf einem gemeinsamen Strahlengang (30) auf das Objekt (70) geleitet wird.

4. Verfahren nach einem der Ansprüche 1 bis 3,
**dadurch gekennzeichnet,**
**dass** nur nicht sichtbares Licht nachgewiesen und für die Auswertung verwendet wird.

5. Verfahren nach einem der Ansprüche 1 bis 4,
**dadurch gekennzeichnet,**
**dass** Licht von mindestens zwei verschiedenen Wellenlängen nachgewiesen wird,
**dass** ermittelt wird, für welche Wellenlänge das Signal-Rausch-Verhältnis am größten ist und
**dass** die Auswertung für die so ermittelte Wellenlänge durchgeführt wird.

6. Verfahren nach einem der Ansprüche 1 bis 5,
**dadurch gekennzeichnet,**
**dass** als Lichtmuster ein Streifenmuster verwendet wird.

7. Verfahren nach einem der Ansprüche 1 bis 6,
**dadurch gekennzeichnet,**
**dass** die verschiedenen Sendemodule zeitlich nacheinander aktiviert werden.

8. Verfahren nach einem der Ansprüche 1 bis 7,
**dadurch gekennzeichnet,**
**dass** die Sendemodule in einem Gehäuse mit gleichen Abständen zueinander angeordnet sind.

9. Verfahren nach einem der Ansprüche 1 bis 8,
**dadurch gekennzeichnet,**
**dass** durch die Sendemodule gleiche Lichtmuster, insbesondere parallel, in den Überwachungsbereich gestrahlt werden.

10. Verfahren nach einem der Ansprüche 1 bis 9,
**dadurch gekennzeichnet,**
**dass** die Sendemodule der ersten Auswahl und/oder die Sendemodule der zweiten Auswahl gleiche Abstände voneinander aufweisen.

11. Verfahren nach einem der Ansprüche 1 bis 10,
**dadurch gekennzeichnet,**
**dass** zum Durchführen eines Übersichtsscans Sendemodule der ersten Auswahl, die zueinander benachbart sind, zeitlich unmittelbar nacheinander aktiviert werden und/oder
**dass** zum Durchführen eines Objektscans Sendemodule der zweiten Auswahl, die zueinander benachbart sind, zeitlich unmittelbar nacheinander aktiviert werden.

12. Verfahren nach einem der Ansprüche 1 bis 11,
**dadurch gekennzeichnet,**
**dass** zwischen Sendemodulen (27) der Teilmenge der ersten Auswahl jeweils mindestens ein Sendemodul (26) der zweiten Auswahl liegt.

13. Verfahren nach einem der Ansprüche 1 bis 12,
**dadurch gekennzeichnet,**
**dass** bei der zweiten Ortsauflösung der kleinste Abstand des von den Sendemodulen generierten Lichtmusters kleiner ist als die Hälfte einer linearen Abmessung eines nachzuweisenden Objekts.

14. Verfahren nach einem der Ansprüche 1 bis 13,
**dadurch gekennzeichnet,**
**dass** eine Übersichtsmessung abgebrochen wird, sobald ein Objekt festgestellt wird, und dass anschließend eine Objektmessung durchgeführt wird.

## Claims

1. Method for measuring objects,
in which a light pattern (72) is beamed by a plurality of transmitting modules (20 to 24) into an observation zone (500), the transmitting modules (20 to 24) being arranged at a distance to each other,
in which light (75) radiated back from the observation zone is detected by at least one spatially resolving detector unit (300),
in which a surface contour of an object (70) located in the observation zone is determined on the basis of the detected light according to the light section principle,
in which a maximum spatial resolution is caused by the intervals at which the transmitting modules are spaced from each other,
**characterized in that**
in an overview measurement, a first selection of transmission modules (25, 27) is activated,
a first spatial resolution is defined by said first selection of transmission modules (25, 27),
in an object measurement, a second selection (26) of transmission modules is activated, which second selection (26) covers the zone of the transmission modules (27) that had produced a signal differing from a background signal or reference signal in the overview measurement,
a second spatial resolution is defined by said second selection of transmission modules (26) or by said second selection of transmission modules (26) together with at least a selected number of said transmission modules (27) pertaining to said first selection, which second spatial resolution is greater than said first spatial resolution, and
an overall region registered in the overview measurement is greater than that registered in the object measurement.

2. Method according to claim 1,
**characterized in that**
information concerning objects to be detected is taken into consideration when selecting said transmission modules of the overview measurement and of said object measurement.

3. Method according to claim 1 or claim 2,
**characterized in that**
said transmission modules each emit light (13, 14) of at least two different wavelengths and
that the light having the at least two different wavelengths is transmitted along a common optical path (30) toward said object (70).

4. Method according to any one of claims 1 to 3,
**characterized in that**
only non-visible light is detected and used for the evaluation.

5. Method according to any one of claims 1 to 4,
**characterized in that**
light from at least two different wavelengths is detected,
that a wavelength is determined for which the signal to noise-ratio is greatest and
the evaluation is carried out for the thus determined wavelength.

6. Method according to any one of claims 1 to 5,
**characterized in that**
the light pattern used is a striped pattern.

7. Method according to any one of claims 1 to 6,
**characterized in that**
the various transmission modules are activated in a temporal sequence.

8. Method according to any one of claims 1 to 7,
**characterized in that**
said transmission modules are accommodated in a housing and are equally spaced.

9. Method according to any one of claims 1 to 8,
**characterized in that**
identical light patterns are projected by said transmission modules, more particularly in parallel, into said observation zone.

10. Method according to any one of claims 1 to 9,
**characterized in that**
said transmission modules pertaining to said first selection and/or said transmission modules pertaining to said second selection are spaced from each other by identical intervals.

11. Method according to any one of claims 1 to 10,
**characterized in that**
in order to carry out an overview scan, transmission modules pertaining to said first selection which are adjacent to each other, are activated in direct temporal succession and/or
that in order to carry out an object scan, transmission modules pertaining to said second selection which are adjacent to each other are activated in direct temporal succession.

12. Method according to any one of claims 1 to 11,
**characterized in that**
at least one transmission module (26) pertaining to said second selection is disposed between each of the transmission modules (27) included in said selected number of modules pertaining to said first selection.

13. Method according to any one of claims 1 to 12,
**characterized in that**
in the case of the second spatial resolution the smallest interval of the light pattern generated by said transmission modules is smaller than one half of a linear dimension of an object to be detected.

14. Method according to any one of claims 1 to 13,
**characterized in that**
an overview measurement is stopped as soon as an object has been found, whereupon an object measurement is carried out.

## Revendications

1. Procédé pour mesurer des objets,
dans lequel, avec des modules émetteurs (20-24) qui sont disposés à distance les uns des autres, un motif lumineux (72) est envoyé dans une zone de surveillance (500),
dans lequel la lumière (75) réfléchie depuis la zone de surveillance est détectée avec au moins un dispositif détecteur (300) à résolution locale,
dans lequel, à partir de la lumière détectée, un contour de surface d'un objet (70) présent dans la zone de surveillance est déterminé suivant le principe de la coupe lumineuse,
dans lequel une résolution locale maximale est donnée par les distances avec lesquelles les modules émetteurs sont disposés les uns par rapport aux autres, ***caractérisé***
***en ce que****,* dans une mesure d'ensemble, une première sélection de modules émetteurs (25, 27) est entreprise,
*en ce qu*'une première résolution locale est donnée par la première sélection de modules émetteurs (25, 27),
***en ce que**,* dans une mesure d'objet, une deuxième sélection (26) de modules émetteurs est actionnée, qui couvre la zone des modules émetteurs (27) qui, lors de la mesure d'ensemble, ont livré un résultat différent d'un signal d'arrière-plan ou signal de référence,
***en* ce qu'**une deuxième résolution locale supérieure à la première résolution locale est donnée par la deuxième sélection de modules émetteurs (26) ou par la deuxième sélection de modules émetteurs (26) en commun avec au moins un sous-ensemble des modules émetteurs (27) de la première sélection, et
***en ce* qu'**une zone totale analysée lors de la mesure d'ensemble est plus grande que lors de la mesure d'objet.

2. Procédé selon la revendication 1, ***caractérisé en ce que*** des informations sur des objets à détecter entrent dans la sélection des modules émetteurs pour la mesure d'ensemble et pour la mesure d'objet.

3. Procédé selon la revendication 1 ou 2,
***caractérisé***
***en ce que*** les modules émetteurs (13, 14) émettent avec au moins deux longueurs d'onde différentes et
***en ce que*** la lumière avec les longueurs d'onde différentes au nombre d'au moins deux est envoyée sur l'objet (70) sur un trajet de rayon commun (30).

4. Procédé selon l'une quelconque des revendications 1 à 3, ***caractérisé en ce que*** seule de la lumière non visible est détectée et utilisée pour l'analyse.

5. Procédé selon l'une quelconque des revendications 1 à 4,
***caractérisé***
***en ce que*** la lumière d'au moins deux longueurs d'onde différentes est détectée, *en ce que* l'on détermine pour quelle longueur d'onde le rapport signal/bruit est le plus grand, et
***en ce que*** l'analyse est réalisée pour la longueur d'onde ainsi déterminée.

6. Procédé selon l'une quelconque des revendications 1 à 5, ***caractérisé en ce que*** l'on utilise comme motif lumineux un motif de bandes.

7. Procédé selon l'une quelconque des revendications 1 à 6, ***caractérisé en ce que*** les différents modules émetteurs sont activés successivement dans le temps.

8. Procédé selon l'une quelconque des revendications 1 à 7, ***caractérisé en ce que*** les modules émetteurs sont placés dans un boîtier à des distances égales les uns des autres.

9. Procédé selon l'une quelconque des revendications 1 à 8, ***caractérisé en ce que*** les modules émetteurs produisent des motifs lumineux identiques, en particulier parallèles, dans la zone de surveillance.

10. Procédé selon l'une quelconque des revendications 1 à 9, ***caractérisé en ce que*** les modules émetteurs de la première sélection et/ou les modules émetteurs de la deuxième sélection présentent entre eux des distances identiques.

11. Procédé selon l'une quelconque des revendications 1 à 10,
***caractérisé***
***en ce que****,* pour effectuer un balayage d'ensemble, des modules émetteurs de la première sélection qui sont mutuellement voisins sont activés immédiatement les uns après les autres dans le temps, et/ou
***en ce que**,* pour effectuer un balayage d'objet, des modules émetteurs de la deuxième sélection qui sont mutuellement voisins sont activés immédiatement les uns après les autres dans le temps.

12. Procédé selon l'une quelconque des revendications 1 à 11, ***caractérisé en ce* qu'**entre des modules émetteurs (27) du sous-ensemble de la première sélection se trouve dans chaque cas au moins un module émetteur (26) de la deuxième sélection.

13. Procédé selon l'une quelconque des revendications 1 à 12, ***caractérisé en ce que**,* lors de la deuxième résolution locale, la plus faible distance du motif lumineux généré par les modules émetteurs est inférieure à la moitié d'une dimension linéaire d'un objet à détecter.

14. Procédé selon l'une quelconque des revendications 1 à 13, *caractérisé en ce qu*'une mesure d'ensemble est interrompue dès qu'un objet est détecté, puis on procède à une mesure d'objet.
